# EUROPEAN PATENT APPLICATION

(11) **EP 3 189 960 A1**
(43) Date of publication of application: **12.07.2017**
(21) Application number: 15899118.2
(22) Date of filing: 13.11.2015
(51) Int. Cl.: B29C 67/00, B22F 3/105, B33Y 10/00, B33Y 30/00, B33Y 50/00

(54) **THREE-DIMENSIONAL ADDITIVE MANUFACTURING DEVICE, PRODUCTION METHOD FOR THREE-DIMENSIONAL ADDITIVE MANUFACTURING DEVICE, AND PRODUCTION PROGRAM FOR THREE-DIMENSIONAL ADDITIVE MANUFACTURING DEVICE**

(71) Applicant: Technology Research Association for Future Additive Manufacturing, Tokyo 103-0027 (JP)
(72) Inventor: INENAGA Takanari, Akishima-shi Tokyo 196-8558 (JP); FURUKAWA Tetsuyoshi, Amagasaki-shi Hyogo 661-0001 (JP)
(74) Representative: TBK
(86) International application number: PCT/JP2015/081970
(87) International publication number: WO 2017/081812

(57) **Abstract**

The shaping speed of a three-dimensional laminated and shaped object by a three-dimensional laminating and shaping apparatus is increased. There is provided a three-dimensional laminating and shaping apparatus for shaping a three-dimensional laminated and shaped object by irradiating a powder with an electron beam. The three-dimensional laminating and shaping apparatus includes a shaping box in which the three-dimensional laminated and shaped object is shaped. The three-dimensional laminating and shaping apparatus includes a heating unit for preheating that is arranged outside the shaping box. The heating unit for preheating is arranged on a side surface side of the shaping box. Furthermore, the heating units for preheating are arranged to surround the shaping box from side surfaces.

## Description

### TECHNICAL FIELD

The present invention relates to a technique of shaping a three-dimensional laminated and shaped object by irradiating a powder as the material of the three-dimensional laminated and shaped object with an electron beam.

### BACKGROUND ART

In the above technical field, patent literature 1 discloses a technique of using an electron beam to preheat a powder in a three-dimensional laminating and shaping apparatus for shaping a three-dimensional laminated and shaped object using an electron beam (paragraph [0013] of the literature).

### CITATION LIST

### PATENT LITERATURE

Patent literature 1: Japanese PCT National Publication No. 2009-544501

### SUMMARY OF THE INVENTION

### TECHNICAL PROBLEM

The technique described in the above literature, however, cannot increase the shaping speed of a three-dimensional laminated and shaped object since an electron beam is used to preheat a powder.

The present invention enables to provide a technique of solving the above-described problem.

### SOLUTION TO PROBLEM

One aspect of the present invention provides a three-dimensional laminating and shaping apparatus for shaping a three-dimensional laminated and shaped object by irradiating a powder with an electron beam, comprising:
a shaping box in which the three-dimensional laminated and shaped object is shaped; and
a heating unit for preheating that is arranged outside the shaping box.

Another aspect of the present invention provides a method of manufacturing a three-dimensional laminating and shaping apparatus for shaping a three-dimensional laminated and shaped object by irradiating a powder with an electron beam, comprising:
installing a shaping box in which the three-dimensional laminated and shaped object is shaped; and
arranging a heating unit for preheating outside the shaping box.

Still other aspect of the present invention provides a program for manufacturing a three-dimensional laminating and shaping apparatus for shaping a three-dimensional laminated and shaped object by irradiating a powder with an electron beam, the program for causing a computer to execute a method, comprising:
installing a shaping box in which the three-dimensional laminated and shaped object is shaped; and
arranging a heating unit for preheating outside the shaping box.

### ADVANTAGEOUS EFFECTS OF INVENTION

According to the present invention, since no electron beam is used to preheat a powder, it is possible to increase the shaping speed of a three-dimensional laminated and shaped object.

### BRIEF DESCRIPTION OF DRAWINGS

Fig. 1 is a view showing the arrangement of a three-dimensional laminating and shaping apparatus according to the first embodiment of the present invention;
Fig. 2A is a schematic view for explaining the overall arrangement of a three-dimensional laminating and shaping apparatus according to the second embodiment of the present invention;
Fig. 2B is a partial enlargement side sectional view showing the arrangement of the shaping box and heating units of the three-dimensional laminating and shaping apparatus according to the second embodiment of the present invention;
Fig. 2C is a partial enlargement plan view showing the arrangement of the shaping box and heating units of the three-dimensional laminating and shaping apparatus according to the second embodiment of the present invention;
Fig. 3A is a plan view for explaining the state of movement of the heating unit of the three-dimensional laminating and shaping apparatus according to the second embodiment of the present invention;
Fig. 3B is a plan view for explaining the state of movement of the heating unit of the three-dimensional laminating and shaping apparatus according to the second embodiment of the present invention;
Fig. 3C is a plan view for explaining the state of movement of the heating unit of the three-dimensional laminating and shaping apparatus according to the second embodiment of the present invention;
Fig. 3D is a plan view for explaining the state of movement of the heating unit of the three-dimensional laminating and shaping apparatus according to the second embodiment of the present invention;
Fig. 3E is a plan view for explaining the state of movement of the heating unit of the three-dimensional laminating and shaping apparatus according to the second embodiment of the present invention;
Fig. 4A is a schematic view for explaining the overall arrangement of a three-dimensional laminating and shaping apparatus according to the third embodiment of the present invention;
Fig. 4B is a partial enlargement side sectional view showing the arrangement of the shaping box and heating units of the three-dimensional laminating and shaping apparatus according to the third embodiment of the present invention;
Fig. 4C is a partial enlargement plan view showing the arrangement of the shaping box and heating units of the three-dimensional laminating and shaping apparatus according to the third embodiment of the present invention;
Fig. 5A is a side view schematically showing the arrangement of the heating units of a three-dimensional laminating and shaping apparatus according to the fourth embodiment of the present invention;
Fig. 5B is a side view schematically showing another arrangement of the heating units of the three-dimensional laminating and shaping apparatus according to the fourth embodiment of the present invention; and
Fig. 6 is a side view schematically showing another example of the arrangement of the heating units of the three-dimensional laminating and shaping apparatus according to the fourth embodiment of the present invention.

### DESCRIPTION OF THE EMBODIMENTS

Preferred embodiments of the present invention will now be described in detail with reference to the drawings. It should be noted that the relative arrangement of the components, the numerical expressions and numerical values set forth in these embodiments do not limit the scope of the present invention unless it is specifically stated otherwise.

### [First Embodiment]

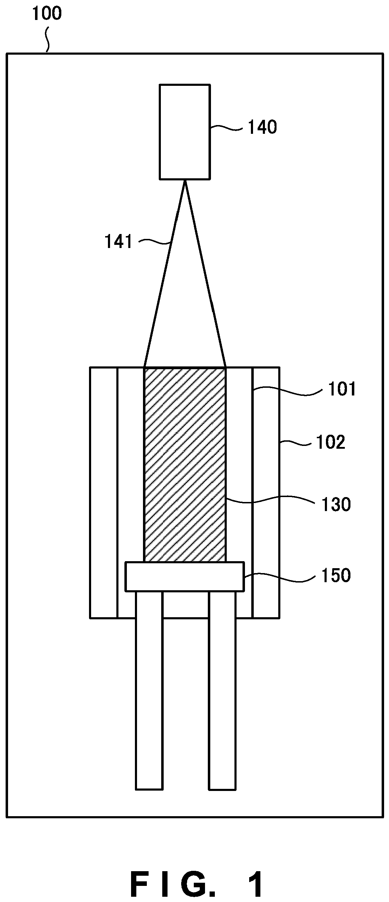

A three-dimensional laminating and shaping apparatus 100 as the first embodiment of the present invention will be described with reference to Fig. 1. The three-dimensional laminating and shaping apparatus 100 is an apparatus for manufacturing a three-dimensional laminated and shaped object 130 by melting a powder as the material of the three-dimensional laminated and shaped object by irradiating the powder with an electron beam 141, and hardening the powder.

As shown in Fig. 1, the three-dimensional laminating and shaping apparatus 100 includes a shaping box 101 and heating units 102. The three-dimensional laminated and shaped object 130 is shaped in the shaping box 101 by irradiating the powder as the material of the three-dimensional laminated and shaped object 130 with the electron beam 141 generated from an electron beam irradiator 140. The three-dimensional laminated and shaped object 130 is shaped on a base plate 150 in the shaping box 101. The heating units 102 are arranged outside the shaping box 101, for example, arranged to surround the shaping box 101, and heat the shaping box 101. The heating units 102 can be used to preheat the powder in the shaping box 101.

According to this embodiment, since no electron beam is used to preheat the powder, it is possible to increase the shaping speed of the three-dimensional laminated and shaped object.

### [Second Embodiment]

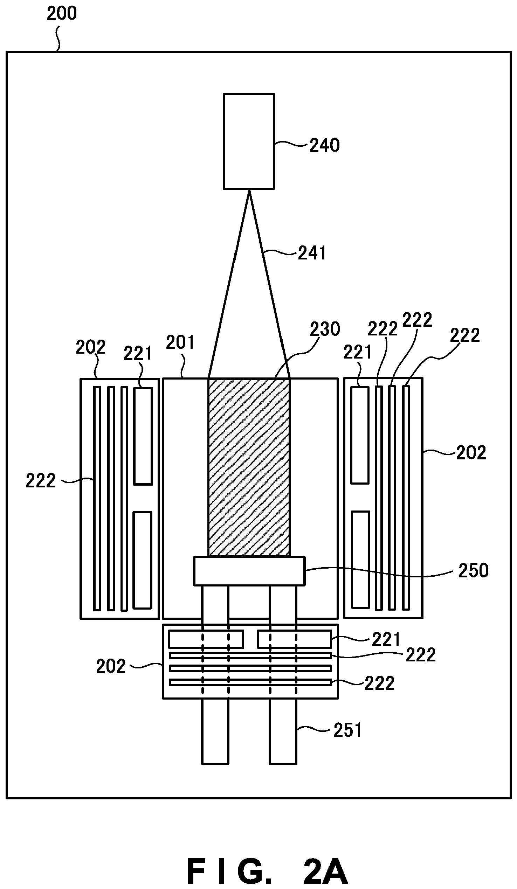

A three-dimensional laminating and shaping apparatus 200 according to the second embodiment of the present invention will be described with reference to Figs. 2A to 4E. Note that in a description of this embodiment, to avoid the views from becoming complicated, an evacuator, a material supplier, the thickness of the wall of a shaping box, and the like are omitted, as needed.

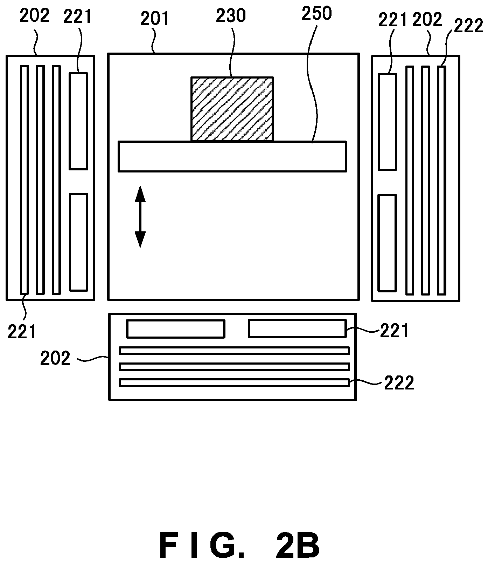

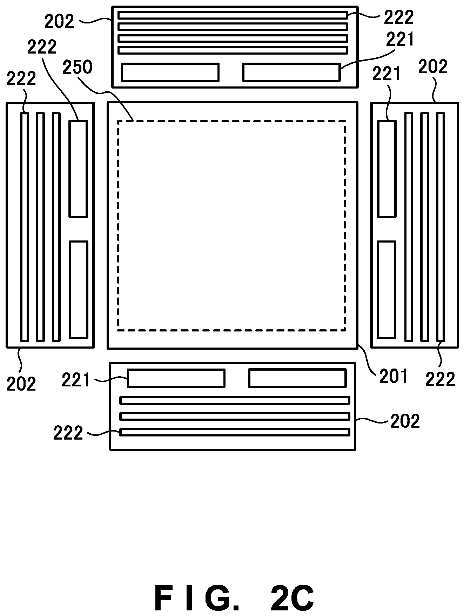

Fig. 2A is a schematic view for explaining the overall arrangement of the three-dimensional laminating and shaping apparatus 200 according to this embodiment. Fig. 2B is a partial enlargement side sectional view showing the arrangement of the shaping box and heating units of the three-dimensional laminating and shaping apparatus 200 according to this embodiment. Fig. 2C is a partial enlargement plan view showing the arrangement of the shaping box and heating units of the three-dimensional laminating and shaping apparatus according to this embodiment. Note that Figs. 2B and 2C do not show some members to avoid the views from becoming complicated.

The three-dimensional laminating and shaping apparatus 200 includes a shaping box 201 and heating units 202. A base plate 250 is provided in the shaping box 201. The base plate 250 serves as a shaping table on which a three-dimensional laminated and shaped object 230 is shaped. The three-dimensional laminated and shaped object 230 is shaped on the base plate 250. The three-dimensional laminated and shaped object 230 is shaped by irradiating a powder such as a metal as a material with an electron beam 241 from an electron beam irradiator 240, and laminating the powder. An adiabatic material for heat insulation may be provided in the shaping box 201 to keep the temperature in the shaping box 201. For example, an adiabatic sheet may be wound around the overall three-dimensional laminating and shaping apparatus 200. A driver 251 drives the base plate 250 in the vertical direction.

The heating units 202 are arranged to surround the shaping box 201 from all directions. The heating unit 202 is also arranged on the bottom surface side of the shaping box 201. That is, the heating units 202 are arranged to surround the shaping box 201 from the side surfaces and bottom surface of the shaping box 201. The shaping box 201 arranged on the bottom surface side may move in the vertical directions in synchronism with the vertical movement of the base plate 250, may be fixed, or may be selected to move or be fixed, as needed.

The arrangement of each heating unit 202 will be described next. Each heating unit 202 is formed by including heaters 221 and reflectors 222. As each heater 221, for example, an electric heater, a gas heater, or the like is typically used, but the present invention is not limited to them.

The reflectors 222 are reflecting plates for reflecting radiant heat from the heaters 221. The heaters 221 and reflectors 222 are arranged in the heating unit 202 so that the heaters 221 are arranged on a side closer to the shaping box 201 and the reflectors 222 are arranged on a side farther from the shaping box 201, that is, on the rear surface sides (back sides) of the heaters 221.

Arranging the reflectors 222 behind the heaters 221 makes it possible to guide, to the shaping box 201, radiant heat radiated on the opposite side of the shaping box 201 by reflecting it by the reflectors 222, thereby implementing efficient heating.

A metal plate is typically used as each reflector 222 but ceramic or brick may be used. The reflector 222 using a metal plate hardly generates dust, as compared with the reflector 222 using ceramic, brick, or the like, and also has a small heat capacity. Therefore, the temperature is raised very quickly and the heating time and cooling time are short. To prevent dust such as metal vapor from attaching to the heaters 221 and reflectors 222, metal covers made of stainless steel (SUS) or the like may be attached to the heating units 202. Since the arrangement of each heating unit 202 is simple, the overall weight of the heating unit 202 is very small.

Temperature control of the heaters 221 may be automatically executed by a controller (not shown) for the heaters 221, or may be manually set by the user of the three-dimensional laminating and shaping apparatus 200. Note that a temperature heatable by the heaters 221 preferably falls within a range from 150°C to a temperature lower than the melting point of a powder such as a metal powder used as the material of the three-dimensional laminated and shaped object. However, the present invention is not limited to this.

As temperature control, for example, different setting temperatures may be set for the upper heater 221 and the lower heater 221 of each heating unit 202. Along with downward movement of the base plate 250, the temperature may be sequentially changed from the upper heater 221 to the lower heater 221. Conversely, the temperature may be sequentially changed from the lower heater 221 to the upper heater 221.

The arrangement in which the heaters 221 are vertically arranged has been explained. One heater 221 may be included or three or more heaters 221 may be vertically arranged. If a plurality of heaters 221 are provided, the above-described temperature control allows finer temperature management. For example, the heaters 221 to be operated may be changed in accordance with the position of the base plate 250, or all the heaters 221 may perform heating at a predetermined temperature regardless of the position of the base plate 250.

In addition to the temperature control, a heating target portion may be controlled. For example, the heating target portion need not be the overall shaping box 201, and part of the shaping box 201 may be partially heated. This can heat a portion near the upper portion irradiated with the electron beam to decrease the heating portion, thereby obtaining the energy saving effect.

Note that no heating unit 202 is arranged on the upper surface side of the shaping box 201 not to block the optical path of the electron beam 241 from the electron beam irradiator 240. However, for example, a heating unit 202 having a shape which does not block the optical path of the electron beam 241 may be provided. Although this embodiment has described the arrangement in which the heating unit 202 is provided on the bottom surface side of the shaping box 201, an arrangement in which no heating unit 202 is provided on the bottom surface side of the shaping box 201 may be adopted.

If the heating unit 202 is provided on the upper surface side of the shaping box 201, the heating unit 202 on the upper surface side may use, for example, lamps or lasers, instead of using the heaters 221 as heating sources.

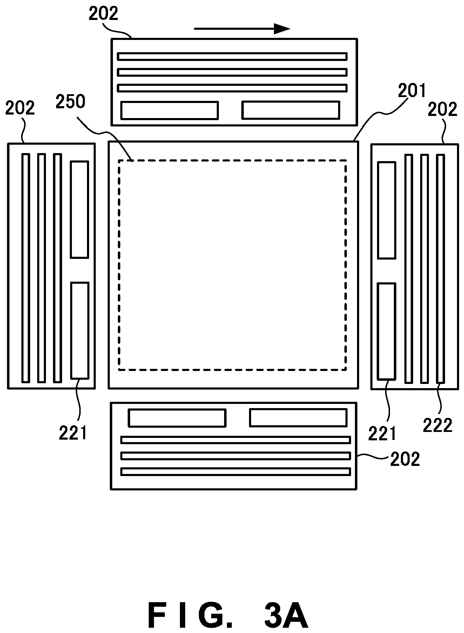

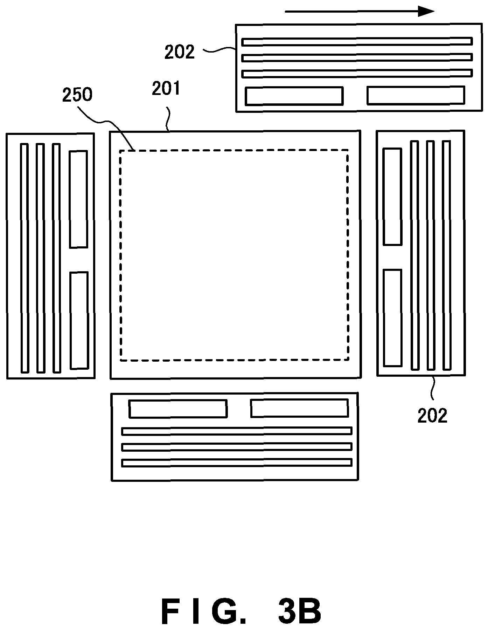

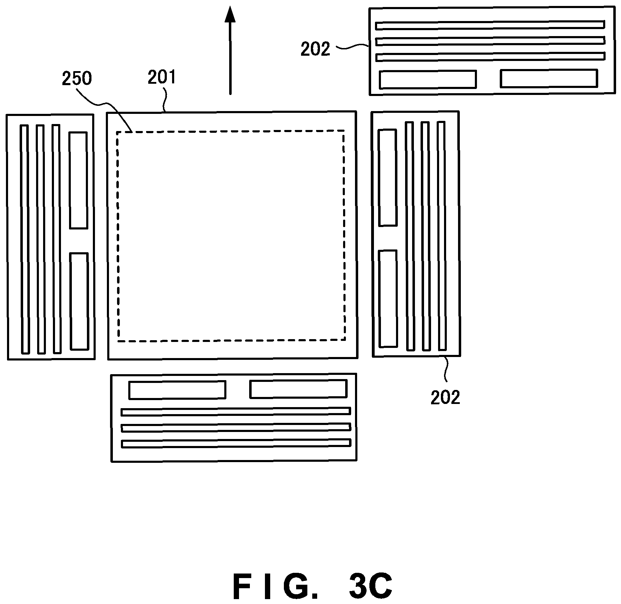

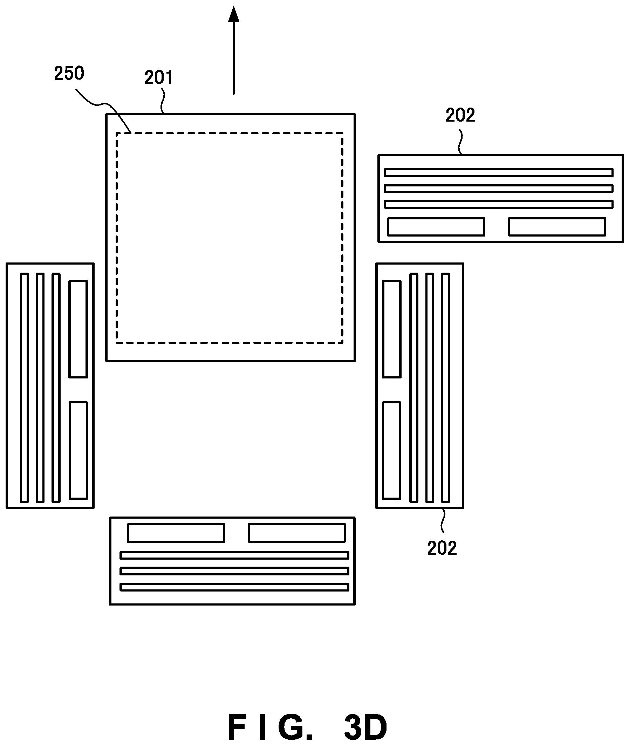

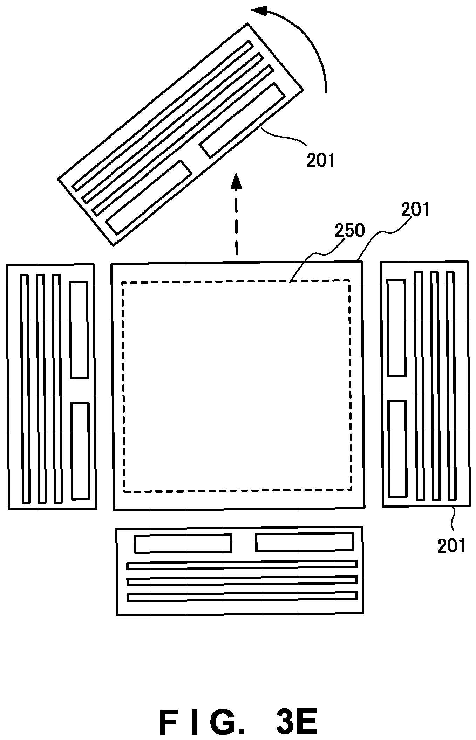

Figs. 3A to 3E are views each showing the state of movement of the heating unit 202 of the three-dimensional laminating and shaping apparatus 200 according to this embodiment. As shown in Figs. 3A to 3D, the heating unit 202 moves by sliding in the horizontal direction by a slide mechanism (not shown). By moving the heating unit 202 in a direction of an arrow in this way, the shaping box 201 can be extracted. Note that as shown in Fig. 3E, the heating unit 202 may be configured to open like a door, instead of sliding in the horizontal direction. Either of the arrangements may be adopted as long as the shaping box 201 can be extracted.

According to this embodiment, it is not necessary to preheat the powder as the material of the three-dimensional laminated and shaped object using the electron beam, and it is thus possible to increase the shaping speed of the three-dimensional laminated and shaped object. Since a process of shaping the three-dimensional laminated and shaped object is performed in a vacuum, an adiabatic material and radiant heat by the reflectors can seal heat in the shaping box, thereby implementing heat insulation of the shaping box. Furthermore, since it is possible to heat the shaping box and implement heat insulation, a temperature gradient within the three-dimensional laminated and shaped object can be made small, thereby suppressing the occurrence of a thermal stress.

### [Third Embodiment]

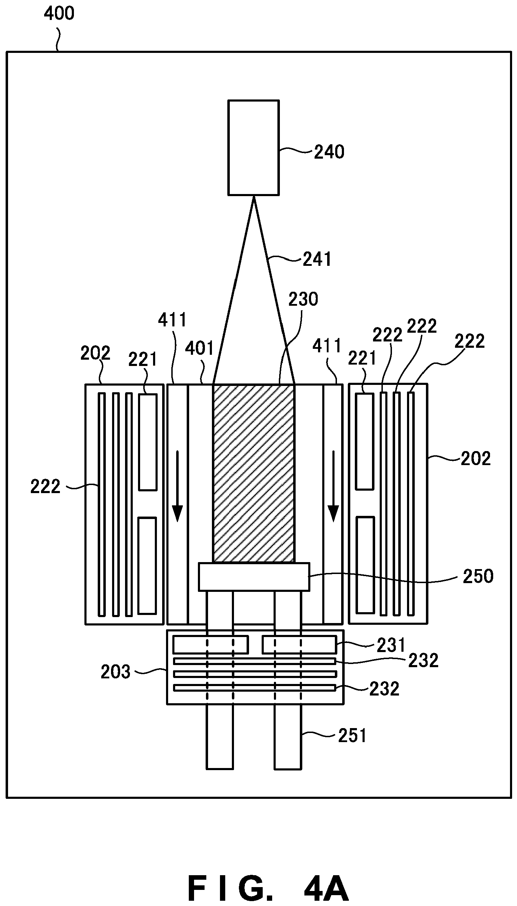

A three-dimensional laminating and shaping apparatus 400 according to the third embodiment of the present invention will be described next with reference to Figs. 4A to 4C. Note that in a description of this embodiment, to avoid the views from becoming complicated, an evacuator, a material supplier, and the like are omitted, as needed.

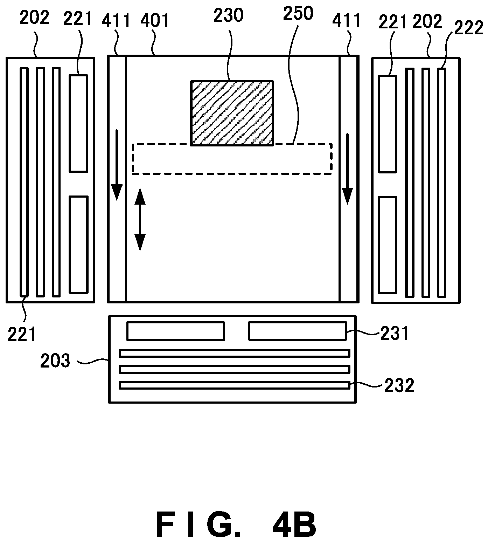

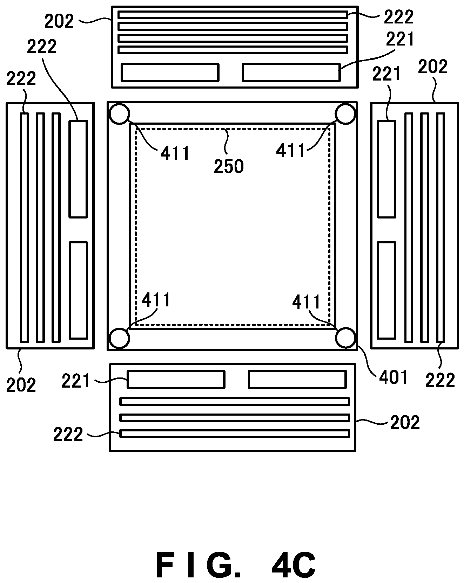

Fig. 4A is a view for explaining the overall arrangement of the three-dimensional laminating and shaping apparatus 400 according to this embodiment. Fig. 4B is a partial enlargement side sectional view showing the arrangement of the shaping box and heating units of the three-dimensional laminating and shaping apparatus 400 according to this embodiment. Fig. 4C is a partial enlargement plan view showing the arrangement of the shaping box and heating units of the three-dimensional laminating and shaping apparatus 400 according to this embodiment. Note that Figs. 4B and 4C do not show some members to avoid the views from becoming complicated.

The three-dimensional laminating and shaping apparatus 400 according to this embodiment is different from that in the second embodiment in that coolant channels are included. The remaining components and operations are the same as those in the second embodiment. Hence, the same reference numerals denote the same components and operations, and a detailed description thereof will be omitted.

A shaping box 401 includes coolant channels 411. The coolant channels 411 are provided in the wall of the shaping box 401. In this embodiment, one coolant channel 411 is arranged at each of the four comers of the shaping box 401. However, the arrangement positions of the coolant channels 411 and the arrangement number of coolant channels 411 are not limited to them.

Note that the arrangement in which the coolant channels 411 are provided in the wall of the shaping box 401 has been explained in this embodiment. However, the location in which the coolant channels 411 are provided is not limited to this. For example, the coolant channels 411 may be attached outside the shaping box 401, that is, the outer wall of the shaping box 401. Each coolant channel 411 has a linear shape, but the present invention is not limited to this. Each coolant channel 411 may have, for example, a curve shape or a composite shape including a curve portion and linear portion.

When a coolant flows through the coolant channels 411, the shaping box 401 can be cooled. For example, if the shaping box 401 is directly released to the atmosphere without cooling the shaping box 401 after the end of shaping of a three-dimensional laminated and shaped object 230, the temperature of the completed three-dimensional laminated and shaped object 230 remains high, and thus the three-dimensional laminated and shaped object 230 is immediately oxidized, resulting in a degradation in quality. In addition, if the shaping box 401 is cooled by natural cooling after the end of shaping, it takes time to complete cooling. To cope with this, a coolant flows through the coolant channels 411 to cool the shaping box 401, thereby making it possible to extract the three-dimensional laminated and shaped object 230 from the shaping box 401 within a short time.

As a coolant, a cooling gas such as helium or ammonia is typically used. However, any coolant such as a gas or liquid may be used as long as it can cool the shaping box 401.

Note that although not shown in Figs. 4A to 4C, a grid-like rib may be spread in the shaping box 401, and the three-dimensional laminated and shaped object 230 may be made to touch this, thereby cooling the three-dimensional laminated and shaped object 230 and the shaping box 401.

According to this embodiment, since the cooling channels are provided in the shaping box, it is possible to efficiently cool the three-dimensional laminated and shaped object, and thus shorten the time until the completed three-dimensional laminated and shaped object is extracted from the shaping box after shaping.

### [Fourth Embodiment]

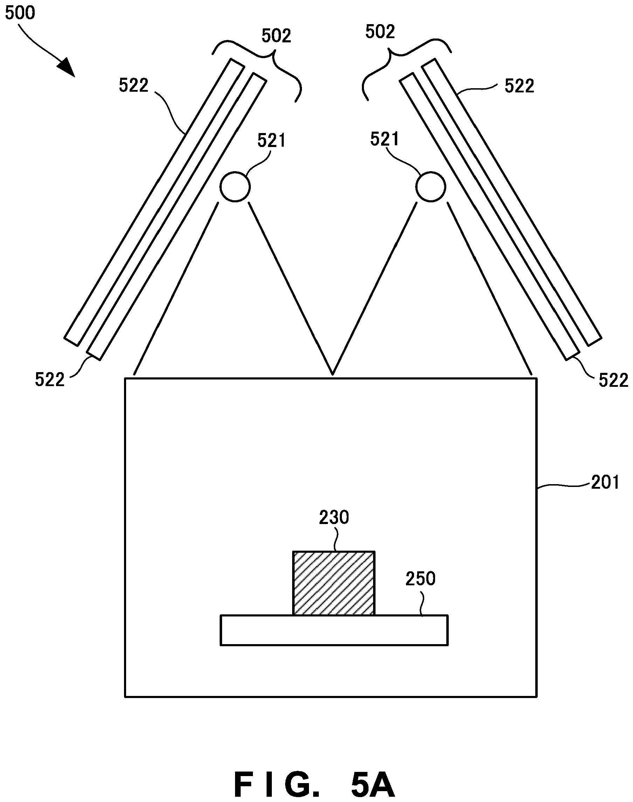

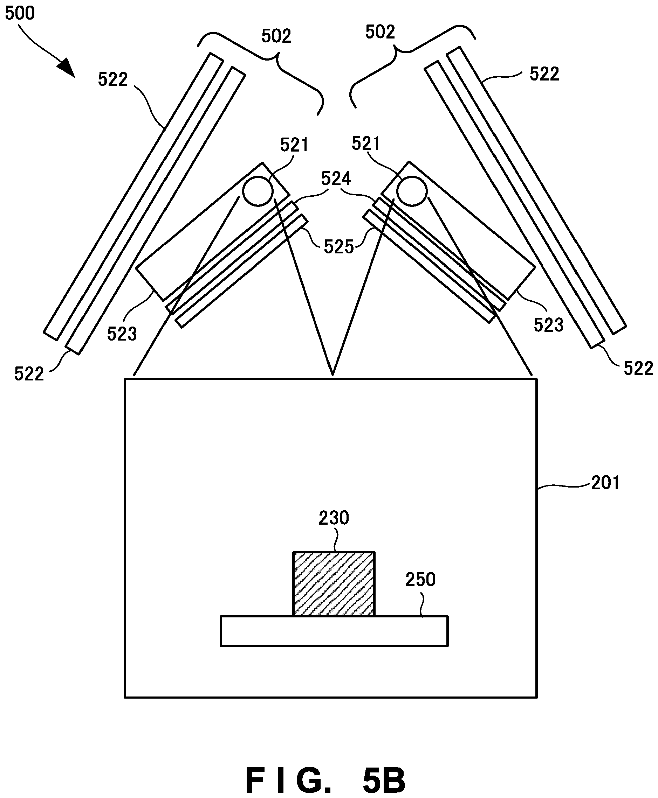

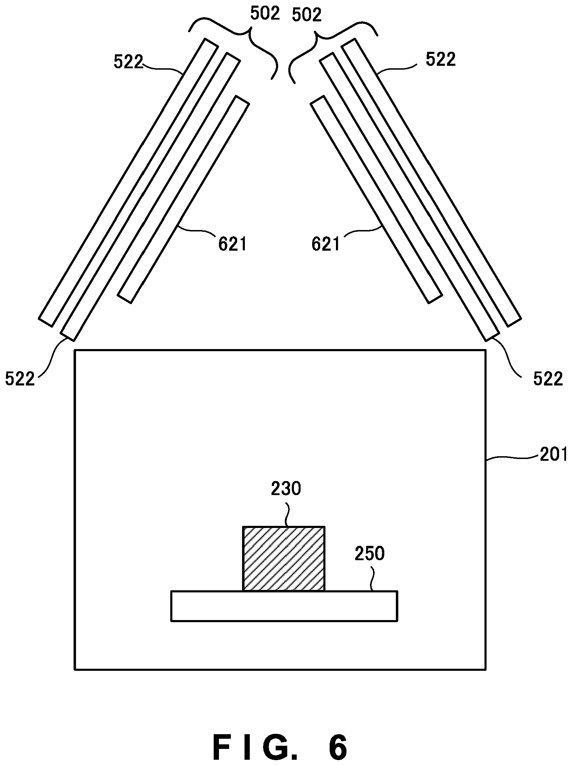

A three-dimensional laminating and shaping apparatus 500 according to the fourth embodiment of the present invention will be described next with reference to Figs. 5A to 6. Fig. 5A is a side view schematically showing the arrangement of the heating units of the three-dimensional laminating and shaping apparatus 500 according to this embodiment. Fig. 5B is a side view schematically showing another arrangement of the heating units of the three-dimensional laminating and shaping apparatus 500 according to this embodiment. Fig. 6 is a side view schematically showing another example of the arrangement of the heating units of the three-dimensional laminating and shaping apparatus 500 according to this embodiment. Note that in a description of this embodiment, to avoid the views from becoming complicated, an evacuator, a material supplier, and the like are omitted, as needed.

As shown in Fig. 5A, the three-dimensional laminating and shaping apparatus 500 includes heating units 502. The heating units 502 are provided on the upper surface side of a shaping box 201. Each heating unit 502 is formed by including a heater 521 and reflectors 522. The heating units 502 heat a three-dimensional laminated and shaped object 230 in the shaping box 201, a powder spread over a base plate 250, a shaping surface, and the like from the upper surface side of the shaping box 201.

Lamp heaters can be used as the heaters 521, but the present invention is not limited to this. As shown in Fig. 6, for example, the heaters 221 described in the second embodiment or the like may be used as heaters 621, instead of the lamp heaters 521.

As shown in Fig. 5B, each heating unit 502 may also include a cover 523, a protection cover 524, and a wire gauze 525. The cover 523 is arranged around the heater 521 to cover it. The protection cover 524 transmits lamp light of the heater 521 such as a lamp heater, and prevents contamination from attaching to the cover 523. The wire gauze 525 prevents static electricity from being charged in the protection cover 524.

According to this embodiment, it is possible to directly heat the shaping surface and the powder on the base plate from the upper surface side of the shaping box, thereby reducing the power necessary for heating. In addition, since it becomes unnecessary to preheat the powder as the material of the three-dimensional laminated and shaped object, it is possible to increase the shaping speed of the three-dimensional laminated and shaped object.

### [Other Embodiments]

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

Heating units 102, 202, or 502 arranged outside a shaping box 101 or 201 may be arranged outside one of the side surfaces of the shaping box 101 or 201. The heating unit may be arranged on the upper surface side after arranging the heating units to surround the side surfaces (side surfaces + upper surface). Similarly, the heating unit may be arranged on the bottom surface side after arranging the heating units to surround the side surfaces (side surfaces + bottom surface). Alternatively, the heating units may be arranged on the upper and bottom surface sides after arranging the heating units to surround the side surfaces (side surfaces + upper surface + bottom surface).

The present invention is applicable to a system including a plurality of devices or a single apparatus. The present invention is also applicable even when an information processing program for implementing the functions of the embodiments is supplied to the system or apparatus directly or from a remote site. Hence, the present invention also incorporates the program installed in a computer to implement the functions of the present invention by the computer, a medium storing the program, and a WWW (World Wide Web) server that causes a user to download the program. Especially, the present invention incorporates at least a non-transitory computer readable medium storing a program that causes a computer to execute processing steps included in the above-described embodiments.

## Claims

1. A three-dimensional laminating and shaping apparatus for shaping a three-dimensional laminated and shaped object by irradiating a powder with an electron beam, comprising:
a shaping box in which the three-dimensional laminated and shaped object is shaped; and
a heating unit for preheating that is arranged outside said shaping box.

2. The three-dimensional laminating and shaping apparatus according to claim 1, wherein said heating unit for preheating is arranged on a side surface side of said shaping box.

3. The three-dimensional laminating and shaping apparatus according to claim 1 or 2, wherein said heating units for preheating are arranged to surround said shaping box from side surfaces.

4. The three-dimensional laminating and shaping apparatus according to claim 1, wherein said heating unit for preheating is arranged on an upper surface side of said shaping box.

5. The three-dimensional laminating and shaping apparatus according to claim 1, wherein said heating unit for preheating is arranged on a bottom surface side of said shaping box.

6. The three-dimensional laminating and shaping apparatus according to claim 3, wherein said heating unit for preheating is further arranged on an upper surface side of said shaping box.

7. The three-dimensional laminating and shaping apparatus according to claim 3, wherein said heating unit for preheating is further arranged on a bottom surface side of said shaping box.

8. The three-dimensional laminating and shaping apparatus according to claim 3, wherein said heating units for preheating are further arranged on an upper surface side and a bottom surface side of said shaping box.

9. The three-dimensional laminating and shaping apparatus according to any one of claims 1 to 8, wherein
said heating unit for preheating includes a heater and a reflecting plate,
said heater is provided on a side of said shaping box, and
said reflecting plate is provided on a rear surface side of said heater.

10. The three-dimensional laminating and shaping apparatus according to claim 9, wherein said reflecting plate reflects radiant heat from said heater to guide the radiant heat to said shaping box.

11. The three-dimensional laminating and shaping apparatus according to any one of claims 1 to 10, further comprising:
a controller that controls said heating unit for preheating,
wherein said controller controls said heating unit for preheating to heat said overall shaping box.

12. The three-dimensional laminating and shaping apparatus according to any one of claims 1 to 11, wherein said controller controls said heating unit for preheating to partially heat said shaping box.

13. The three-dimensional laminating and shaping apparatus according to any one of claims 1 to 12, further comprising:
a base plate on which the three-dimensional laminated and shaped object is shaped,
wherein said controller heats said shaping box in accordance with movement of said base plate.

14. The three-dimensional laminating and shaping apparatus according to any one of claims 1 to 13, wherein said shaping box includes a channel through which a coolant flows.

15. The three-dimensional laminating and shaping apparatus according to any one of claims 1 to 14, wherein said channel is contained in said shaping box.

16. The three-dimensional laminating and shaping apparatus according to any one of claims 1 to 15, wherein
said shaping box further includes a heat insulator, and
said heat insulator contains an adiabatic material.

17. A method of manufacturing a three-dimensional laminating and shaping apparatus for shaping a three-dimensional laminated and shaped object by irradiating a powder with an electron beam, comprising:
installing a shaping box in which the three-dimensional laminated and shaped object is shaped; and
arranging a heating unit for preheating outside the shaping box.

18. A program for manufacturing a three-dimensional laminating and shaping apparatus for shaping a three-dimensional laminated and shaped object by irradiating a powder with an electron beam, the program for causing a computer to execute a method, comprising:
installing a shaping box in which the three-dimensional laminated and shaped object is shaped; and
arranging a heating unit for preheating outside the shaping box.
